# EUROPEAN PATENT APPLICATION

(11) **EP 1 513 054 A2**
(43) Date of publication of application: **09.03.2005**
(21) Application number: 04021006.4
(22) Date of filing: 03.09.2004
(51) Int. Cl.: G06F 3/033

(54) **Display device, customizing method of the same and computer-readable recording medium with customizing program recorded**

(30) Priority: 08.09.2003 JP 2003315165
(71) Applicant: Digital Electronics Corporation, Osaka-shi, Osaka 559-0031 (JP)
(72) Inventor: Ohnuki, Ryoichi, Kawasaki-shi Kanagawa 214-0003 (JP)
(74) Representative: Urner, Peter, Dipl.-Phys.

(57) **Abstract**

The present invention teaches a display device which enables an input operation by a non-display switch, swiftly transmits displayed screen information to an external unit so as to allow the unit to execute a printout or display processing when an unusual condition occurs during working, comprising a display, a screen information memory in which screen information shown on the display is stored, a touch input detector for detecting a touch input onto the display, a communicator for carrying out data communications with a printer or a recording medium and a controller for controlling these elements, wherein the controller controls transmission of currently displayed screen information through the communicator to the printer or recording medium in response to a trace touch input operation conducted onto the display.

## Description

### BACKGROUND OF THE INVENTION

### 1. Field of the Invention

The present invention relates to a display device, a customizing method of the same and a computer-readable recording medium with a customizing program recorded thereon and, more particularly, to a display device chiefly used for line control and the like in a plant, a customizing method of the same and a computer-readable recording medium on which a customizing program is recorded.

### 2. Description of the Relevant Art

In recent years, a display device for displaying the processing status and the like in each unit has been mounted on equipment such as manufacturing equipment, inspection units and process control systems in a plant. The display device, having an input element of a touch screen type, can facilitate the use of each unit through confirmation of the contents on a display and touch operations onto a display. Moreover, by rewriting screen data of the display device, switches such as buttons, texts, images and the like can be freely laid out on a display screen so as to be adaptable to varied mounted environments.

The display screen of the display device generally consists of multiple pages. A press of a switch displayed on each page enables a jump to an appropriate page or an output of data to a device connected thereto. Since too many jumps decrease the performance of the display device, as many switches frequently used on each page as possible are displayed on the page. However, with more switches displayed within a screen, problems such as induction of an error in operation are more likely to be caused, so that it is also important for easy operation to create a layout of each page with reduced switches on the display.

In order to cope with such problem, a technique has been known, wherein an operation can be conducted through the recognition of an input trace without displaying frequently used switches on a screen. For example, some touch panels built in car navigation systems have a function of storing a trace inputted by touch operation and executing display processing in response to each touch input trace, such as scaling of a road map or scrolling, when it is judged that the touch input trace corresponds to a character or a symbol entered beforehand (see Japanese Patent Laid-open No.H09-050235).

Though it is not of a touch screen type, a display device is exemplified as a technique of an input operation with a non-display switch without changing a screen, into which an application such as a CAD is installed, having a function of identifying an input trace such as a character drawn with a mouse (for example, Japanese Patent Laid-open No.2002-091688).

### 3. Technical Problem

In the display devices mounted on the equipment such as manufacturing equipment, inspection units and process control systems in a plant, generally, a warning alarm is generated, a warning lamp lights up and an error message or the like is displayed on a screen when an unusual event occurs, for example, the measurement value is out of spec, the transferred lot is different from a scheduled one, or forbidden processing was attempted. In this case, it is desirable that an operation supervisor should record the displayed error message and the like for tracking down the cause of the encountered defective condition.

However, the display device described in Japanese Patent Laid-open No.H09-050235, which is mounted on a car navigation system, changes only the contents of display such as scaling of a road map or scrolling, so that the display device is incapable of coping with the above-mentioned situation.

The display device described in Japanese Patent Laid-open No.2002-091688, being a display device for CAD application, changes working environments such as scaling of a display screen, a change of a drawing mode or a deletion of an object, or creates a drawing, so that the display device is incapable of coping with the above situation. Furthermore, the display device is premised on an input operation using a mouse. Therefore, it is not adaptable to the above-mentioned equipment in a plant, having no mouse, which need be simply and swiftly operable.

Using the above-described conventional display devices, it is impossible to store an error message or the like showing the contents of an abnormal event in an instant when it occurs during working. It might be considered that an error message is automatically stored when it is generated, but in that case, problems are caused, for example, unwanted error messages are also stored, or defective conditions closer to the edge of what becomes an error are not stored.

### SOLUTION AND ADVANTAGEOUS EFFECTS

The present invention was developed in order to solve the above-mentioned problem, and it is an object of the present invention to provide a display device which enables an input operation by a non-display switch, swiftly transmits displayed screen information to an external unit so as to allow the unit to execute a printout or display processing when an unusual condition occurs during working, a customizing method of the same and a computer-readable recording medium on which a customizing program is recorded.

In order to achieve the above object, a display device according to the first aspect of the present invention is characterized by being a display device comprising a display, a screen information memory in which screen information shown on the display is stored, a touch input detector for detecting a touch input onto the display, a communicator for carrying out data communications with an external unit and a controller for controlling these elements, wherein the controller controls transmission of currently displayed screen information through the communicator to the external unit in response to a trace touch input operation conducted onto the display.

Using the display device according to the first aspect of the present invention, the currently displayed screen information can be transmitted to the external unit by the trace touch input operation onto the display. Therefore, an operator who recognized an abnormal condition can swiftly transmit the screen information such as an error message or an image indicating an abnormal operating status shown on the display to the external unit by conducting only the trace touch input operation onto the display without changing the screen display of the display, so as to store the screen information therein for making provision for tracking down the cause of the encountered abnormal condition.

A display device according to the second aspect of the present invention is characterized by the trace touch input operation which is a prescribed character input operation and the external unit which is a printer, wherein the screen information and control information for a printout on the printer are transmitted through the communicator to the printer by the trace touch input operation in the display device according to the first aspect of the present invention.

Using the display device according to the second aspect of the present invention, by the prescribed character input operation onto the display, the currently displayed screen information can be swiftly printed out. Therefore, an operator who recognized an abnormal condition can swiftly print out the screen information such as an error message or an image indicating an abnormal operating status shown on the display by conducting only the prescribed character input operation onto the display without changing the screen display of the display, so as to store the screen information on printing paper for making provision for tracking down the cause of the encountered abnormal condition.

A display device according to the third aspect of the present invention is characterized by the trace touch input operation which is a prescribed character input operation and the external unit which is another display device, wherein the screen information is transmitted through the communicator to the another display device by the trace touch input operation in the display device according to the first aspect of the present invention.

Using the display device according to the third aspect of the present invention, by the prescribed character input operation onto the display, the currently displayed screen information can be swiftly shown on a display of the another display device. Therefore, an operator who recognized an abnormal condition can swiftly show on the display of the another display device the screen information such as an error message or an image indicating an abnormal operating status shown on the display by conducting only the prescribed character input operation onto the display without changing the screen display of the display. The screen information can be printed out through the another display device or be stored by writing onto a recording medium.

A customizing method of a display device according to the first aspect of the present invention is characterized by comprising a trace entry step of allowing a user to draw a trace in screen creation software, a trace processing setting step of setting processing in response to the trace and a trace analysis determination information updating step of transferring the trace processing setting to any of the display devices according to the first through third aspects of the present invention and updating trace analysis determination information for analyzing a trace and determining what to do.

Using the customizing method of a display device according to the first aspect of the present invention, the user can set the processing such as a printout or writing onto a recording medium as the processing on the screen information in the external unit, so that the display device can be made suitable for a use environment of the user, resulting in being more convenient.

A computer-readable recording medium according to the first aspect of the present invention is characterized by being a computer-readable recording medium on which recorded is a customizing program for realizing a customizing function of any of the display devices according to the first through third aspects of the present invention, comprising a trace entry step of allowing a user to draw a trace in screen creation software, a trace processing setting step of setting processing in response to the trace and a trace analysis determination information updating step of transferring the trace processing setting to the display device and updating trace analysis determination information for analyzing a trace and determining what to do.

Thus, by only installing the computer-readable recording medium according to the first aspect of the present invention into a personal computer or the like which is communicable with the display device, the user can set the processing such as a printout or writing onto a recording medium as the processing on the screen information in the external unit, so that the display device can be made suitable for a use environment of the user, resulting in being more convenient.

Here, the character input operation includes an input operation of drawing a character, a symbol, a pattern or the like by the trace touch input operation.

### BRIEF DESCRIPTION OF THE DRAWINGS

Fig. 1 is a block diagram schematically showing a construction of a display device according to a first embodiment of the present invention;

Fig. 2 is a flow chart showing the operation of a controller shown in Fig. 1;

Fig. 3 is a flow chart showing in detail a response processing step shown in Fig. 2;

Fig. 4(a) is an illustration showing an example of a screen on a display on which an error message is displayed, Figs. 4(b) and 4(c) are illustrations showing examples of character input operations corresponding to characters 'P' and 'S', respectively, conducted onto the screen shown in Fig. 4(a), and Fig. 4(d) is an illustration showing an example of a screen on the display on which an abnormal operating status is displayed;

Fig. 5 is an illustration showing an example of a screen on a personal computer into which screen creation software used in customizing trace judgment information is installed;

Fig. 6 is a block diagram schematically showing a construction of a display device according to a second embodiment of the present invention;

Fig. 7 is a flow chart showing the operation of a controller shown in Fig. 6;

Fig. 8 is a flow chart showing in detail a response processing step shown in Fig. 7; and

Fig. 9 is an illustration showing an example of a character input operation corresponding to a character 'D' conducted onto the screen shown in Fig. 4(a).

### DETAILED DESCRIPTION

The preferred embodiments of the display device according to the present invention are described below by reference to the Figures of the drawings.

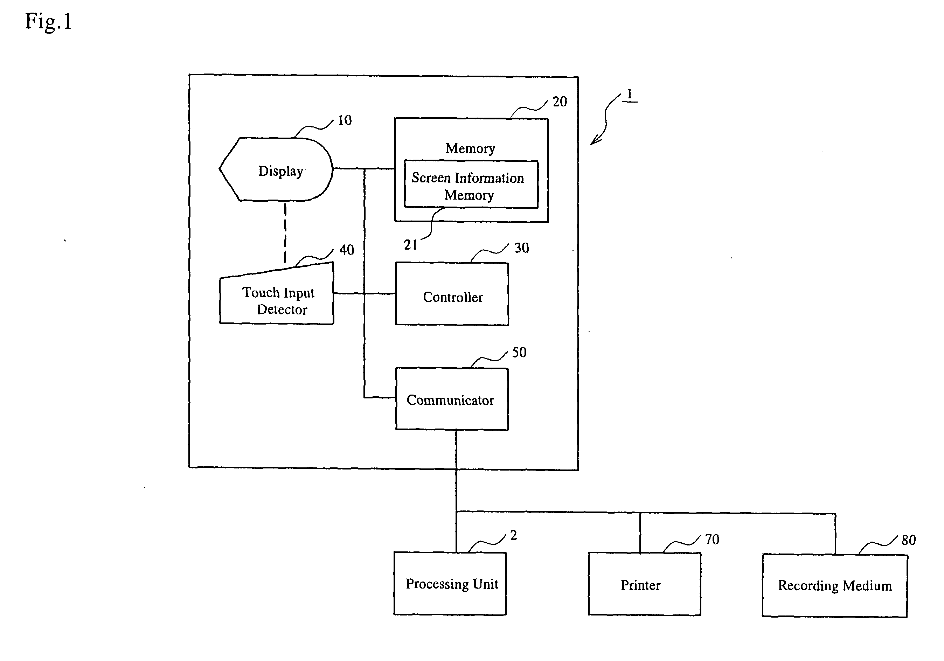

Fig. 1 is a block diagram schematically showing a construction of a display device according to a first embodiment.
Reference numeral 1 in the figure represents a display device according to the first embodiment, comprising a display 10, a memory 20, a screen information memory 21, a controller 30, a touch input detector 40 and a communicator 50. In addition, to the display device 1, a processing unit 2, a printer 70 and a recording medium 80 are connected through the communicator 50.

The display 10 comprises an LCD (Liquid Crystal Display). In another embodiment, it may comprise another display such as an EL (Electro Luminescence) display, a CRT (Cathode Ray Tube) display or a plasma display panel.

The memory 20 comprises memories such as a DRAM, an EEPROM, a SRAM and a VRAM. In the screen information memory 21 included in the memory 20, screen information (screen data) shown on the display 10 is stored. The screen data is formed, for example, by a user's downloading (transferring) screen data originally created by the user using screen creation software in the processing unit 2 (such as a personal computer) to the screen information memory 21 of the display device 1.

The touch input detector 40 detects a touch input onto the display 10 and, more particularly, detects and outputs the presence or absence of a touch input and its input coordinates. It comprises an input detector of a resistive film type using a transparent conductive film such as an ITO film. In another embodiment, it may be a touch input detector of another type adaptable to a touch panel such as a capacitance type, an optical type or an ultrasonic type.

The communicator 50 is used for performing data communications between the controller 30, and the processing unit 2, printer 70 and recording medium 80, being external units connected with a wire or wirelessly, and comprises popular I/O ports.

The controller 30 controls the display 10, memory 20, screen information memory 21, touch input detector 40 and communicator 50, comprising a CPU and the like. The controller 30 operates in such a manner as to generate screen information according to the situation in the screen information memory 21 while monitoring an input operation detected by the touch input detector 40 and display the screen information on the display 10.

Furthermore, in the first embodiment, the controller 30 transmits currently displayed screen information through the communicator 50 to the printer 70 or recording medium 80 in response to a trace touch input operation performed onto the display 10. The details thereof are described below.

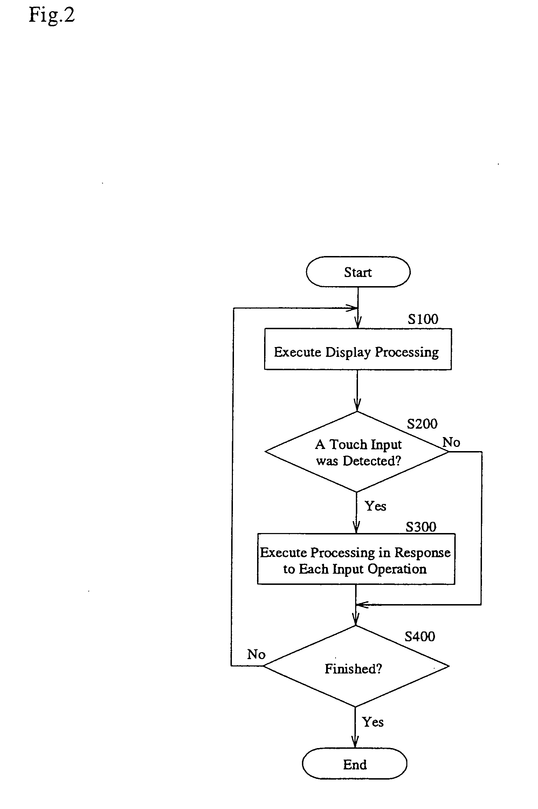

Fig. 2 is a flow chart showing the operation of the controller 30 shown in Fig. 1.
In Step 100, display processing is executed. That is, screen information is generated based on data updated as a result of a prescribed computation or communication, the information is stored in the screen information memory 21, and the display processing thereof onto the display 10 is conducted.

In Step 200, whether a touch input was detected, i.e. whether the touch input detector 40 detected an input operation performed onto the display 10 and produced an output indicating the presence of the input operation is judged. When it is judged that a touch input was detected, the operation goes to a response processing step 300, wherein processing in response to each input operation is conducted, and goes to Step 400. On the other hand, when it is judged that no touch input has been detected, the operation directly goes to Step 400.

In Step 400, whether the system should be finished, i.e. whether a command instructing to finish the system was made is judged. When it is judged that the system should be finished, the flow shown in the figure is ended, while the operation returns to Step 100, when it is judged that the system should not be finished.

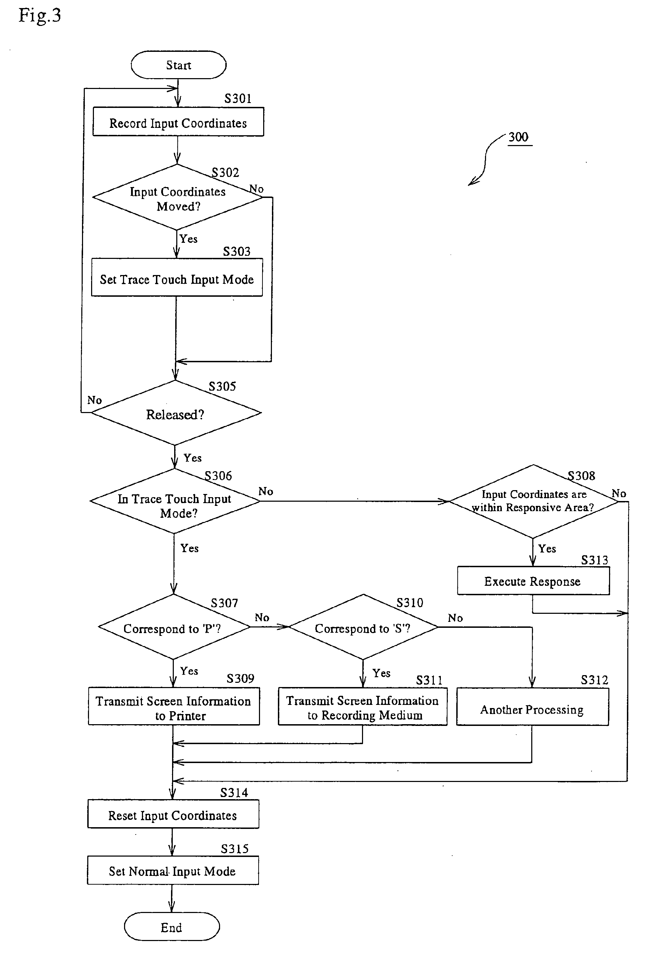

Fig. 3 is a flow chart showing in detail the response processing step 300 shown in Fig. 2.
When detecting a touch input in the above Step 200, the controller 30 records input coordinates read from the touch input detector 40 in the memory 20 in Step 301. When there are already-recorded input coordinates prior to this recording therein, new input coordinates are added in such a manner that those are next to the already-recorded input coordinates. Accordingly, by repeating Step 301, input trace information comprising first-recorded input coordinates (starting coordinates) and the following input coordinates (additional coordinates) is formed.

Thereafter, in Step 302, whether the input coordinates moved, i.e. whether the gap between new input coordinates and the starting coordinates is 0 or exceeds a prescribed standard value to be a margin of determination of a trace touch input operation is judged. When it is judged that the input coordinates have not moved, the operation goes to Step 305. On the other hand, when it is judged that the input coordinates moved, the operation goes to Step 303, wherein an input mode recorded in the memory 20 is set to be a trace touch input mode, and then, goes to Step 305.

In Step 305, whether a finger or the like performing the input operation onto the display 10 was released from the display 10, i.e. whether the detection of the input operation by the touch input detector 40 ceased is judged. When it is judged that it was released, the operation goes to Step 306, while the operation returns to Step 301, when it is judged that it has not been released.

In Step 306, whether the input mode is the trace touch input mode is judged. When it is judged that the input mode is the trace touch input mode, the operation goes to a trace judgment step 307, while the operation goes to Step 308, when it is judged that the input mode is not the trace touch input mode.

In the trace judgment step 307, whether the trace touch input operation conducted onto the display 10 corresponds to a prescribed character input operation indicating a printout, being a character input operation of drawing a character 'P' in this embodiment, is judged. When it is judged that the character input operation corresponds to the character 'P', the operation goes to a trace input response step 309, wherein control information for a printout and the currently displayed screen information are transmitted to the printer 70, and then, goes to Step 314. When receiving the above transmission, the printer 70 prints out the screen information. On the other hand, when it is judged that the character input operation does not correspond to the character 'P', the operation goes to a trace judgment step 310.

In the trace judgment step 310, whether the trace touch input operation conducted onto the display 10 corresponds to a prescribed character input operation indicating screen storage, being a character input operation of drawing a character 'S' in this embodiment, is judged. When it is judged that the character input operation corresponds to the character 'S', the operation goes to a trace input response step 311, wherein the currently displayed screen information is transmitted to the recording medium 80 such as a hard disk to be recorded therein, and then, goes to Step 314. On the other hand, when it is judged that the character input operation does not correspond to the character 'S', the operation goes to Step 312, wherein processing concerning an input operation of drawing a character other than the above characters 'P' and 'S' is conducted, and then, goes to Step 314.

On the other hand, when it is judged that the input mode is not the trace touch input mode and the operation goes to Step 308, whether the input coordinates are within a responsive area on the screen of the display 10, for example, inside an outline of a displayed switch is judged. When it is judged that the input coordinates are within the responsive area, the operation goes to Step 313, wherein the response processing corresponding to the responsive area is executed, and then, goes to Step 314. On the other hand, when it is judged that the input coordinates are not within the responsive area, it is judged that the input is meaningless and the operation directly goes to Step 314.

In Step 314, the input coordinates or input trace information comprising multiple input coordinates recorded in the memory 20 is reset. Thereafter, the operation goes to Step 315, wherein the input mode is set to be a normal input mode, which is the end of the response processing step 300.

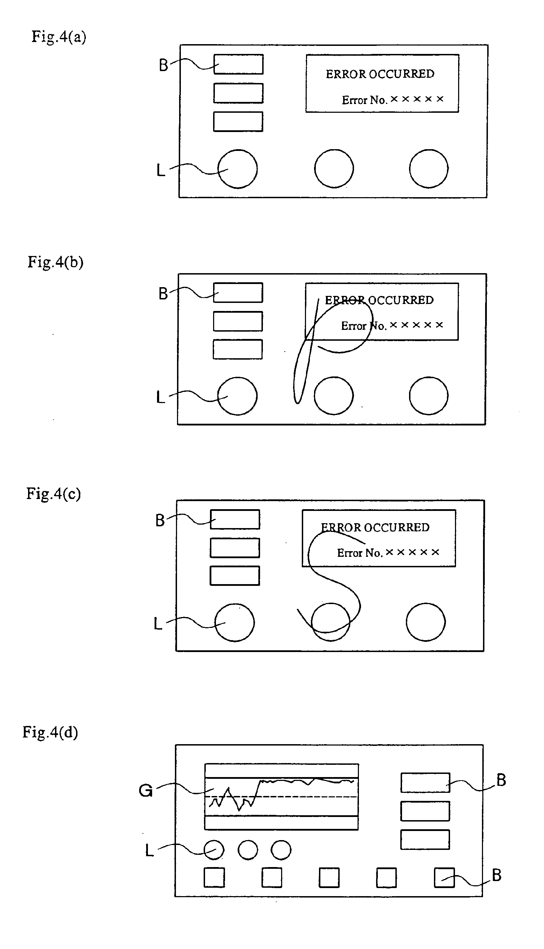

Fig. 4(a) is an illustration showing an example of a screen on the display on which an error message is shown, Figs. 4(b) and 4(c) are illustrations showing examples of character input operations corresponding to characters 'P' and 'S', respectively, conducted onto the screen shown in Fig. 4(a), and Fig. 4(d) is an illustration showing an example of a screen on the display on which an abnormal operating status is displayed.

As shown in Fig. 4(a) or Fig. 4(d), button switches B for controlling an apparatus on which the display device 1 according to the first embodiment is mounted, lamps L indicating the conditions of associated facilities, a graph G of a control parameter and the like are displayed on the screen of the display 10. In Fig. 4(a), a situation where the controller 30 sensed an unusual event in the display device 1 or associated facilities and displayed an error message is shown. In Fig. 4(d), an abnormal operating status where the control parameter remains near the upper limit within prescribed specs is shown. In this case, since the control parameter is within the prescribed specs, it is not regarded as an error.

Using the above display device 1 according to the first embodiment, by the trace touch input operation onto the display 10, the currently displayed screen information can be transmitted to the printer 70 or recording medium 80.

Therefore, an operator who recognized an abnormal condition through the screen as shown in Fig. 4(a) or Fig. 4(d) can swiftly print out the screen information such as an error message or an image indicating an abnormal operating status shown on the display 10 for storage on printing paper or storage on the recording medium 80 for making provision for tracking down the cause of the encountered abnormal condition by conducting only the trace touch input operation shown in Fig. 4(b) or Fig. 4(c) onto the display 10 without changing the screen display on the display 10.

In another embodiment, as the trace touch input operation, any characters, symbols, patterns or the like other than the above-mentioned characters 'P' and 'S' are set. In another embodiment, trace judgment information accessed when judging whether an input by a prescribed trace touch input operation was conducted is customizable. Therefore, a user can set the trace judgment information so as to define his/her original character input operation, so that the display device can be made suitable for a use environment of the user, resulting in being more convenient.

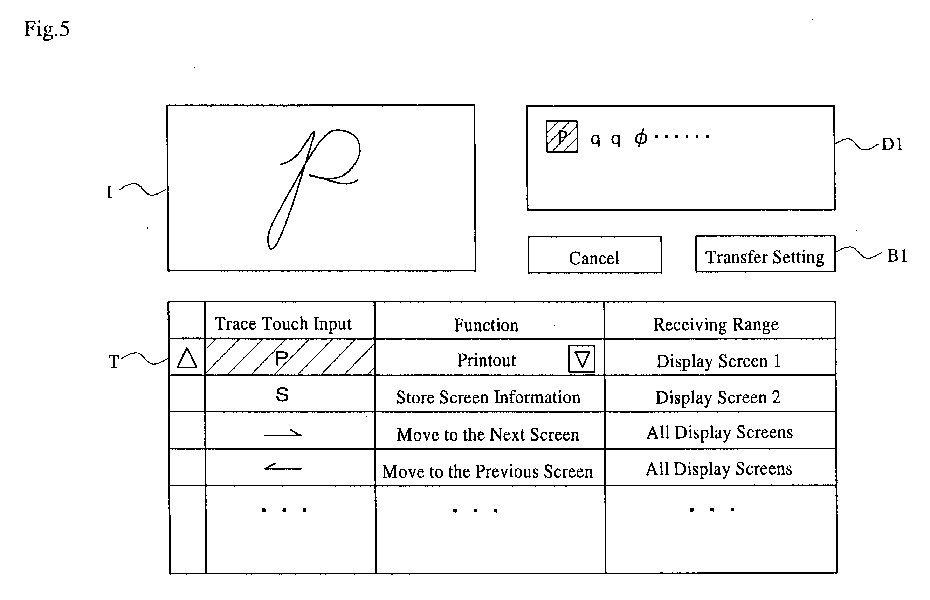

As a method for making the trace judgment information customizable, a method comprising a trace entry step of allowing the user to draw a trace in screen creation software, a trace processing setting step of setting processing in response to the trace and a trace analysis determination information updating step of transferring the trace processing setting to the display device 1 so as to update trace analysis determination information used for analyzing a trace and determining what to do is exemplified. Fig. 5 is an illustration showing an example of a screen on a personal computer into which screen creation software used in customizing the trace analysis determination information by this method is installed.

When a CPU of the personal computer receives an input by a trace touch input operation from the user in an input field I of a display screen, it analyzes the inputted trace based on the trace analysis determination information, searches characters or symbols corresponding to the trace and notifies the user by displaying them in a display field D1. When it is judged that the inputted trace is similar to an already-entered one as a result of the analysis, the user is warned of the effect. Then, the user is allowed to select one from among the searched characters or symbols displayed in the display field D1. When an appropriate one is not included in the search results, the user is allowed to input using an external keyboard or the like. Thus, a character code corresponding to the trace is determined.

In another embodiment, traces and character codes corresponding to the traces are previously entered, and a user is allowed to select which set of a trace and a character code a change is modified.

In a setting table T, a function to be allocated to the trace touch input operation is set by allowing the user to select through a pull-down menu or the like. As functions to be allocated, a printout, screen information storage, moving to the next screen and moving to the previous screen are exemplified, but the functions are not limited to those. In addition, a receiving range of the trace touch input operation is determined. That is, the user is allowed to select a screen display which should be in a state where the trace touch input operation can be accepted from screen displays on the display 10 for setting.

When an input operation by a transfer button B1 is detected, the trace analysis determination information produced in the above-described manner is transferred as a new piece of trace analysis determination information from the personal computer to the memory 20 of the display device 1. When there is another display screen data, both of them may be transferred to the memory 20 at the same time.

By thus updating the trace analysis determination information, the controller 30 can conduct the processing set in the setting table T when judging that an appropriate trace touch input operation is conducted while the receiving range of the trace touch input operation set in the setting table T is displayed on the screen.

Here, the trace by the trace touch input operation shown in Fig. 4(a) or Fig. 4(c) expresses the movement of the input, which is not actually displayed on the display 10. In another embodiment, a controller 30 writes the trace into a screen information memory 21 and displays it on a display 10. In this case, it is desired that screen information for transmission should be stored in another space of a memory 20 in order that the screen information including the above trace shall not be transmitted to an external unit such as a printer 70.

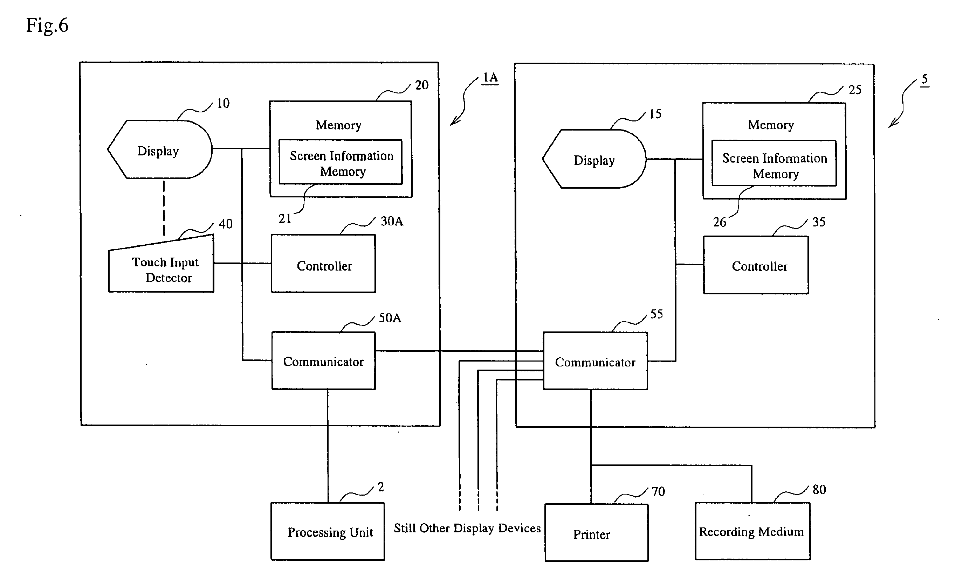

Fig. 6 is a block diagram schematically showing a construction of a display device according to a second embodiment.
Reference numeral 1A in the figure represents a display device according to the second embodiment and reference numeral 5 therein represents another display device. The display device 1A comprises a display 10, a memory 20, a screen information memory 21, a controller 30A, a touch input detector 40 and a communicator 50A. Since these elements are similar to those described in the first embodiment, they are not described below. However, to the display device 1A, the another display device 5, being an external unit, is connected through the communicator 50A with a wire or wirelessly besides a processing unit 2, so that data communications can be conducted between the display device 1A and the display device 5 through the communicator 50A, differently from the first embodiment.

The another display device 5 comprises a display 15, a memory 25, a screen information memory 26, a controller 35 and a communicator 55. In addition, to the another display device 5, a printer 70, a recording medium 80 and still other display devices (not shown) are connected through the communicator 55. Since each element included in the another display device 5 is similar to each element included in the display device 1, it is not described below.

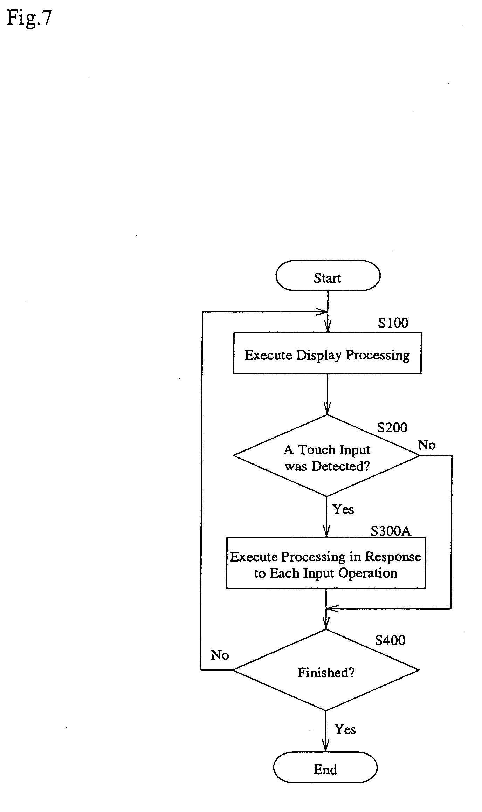

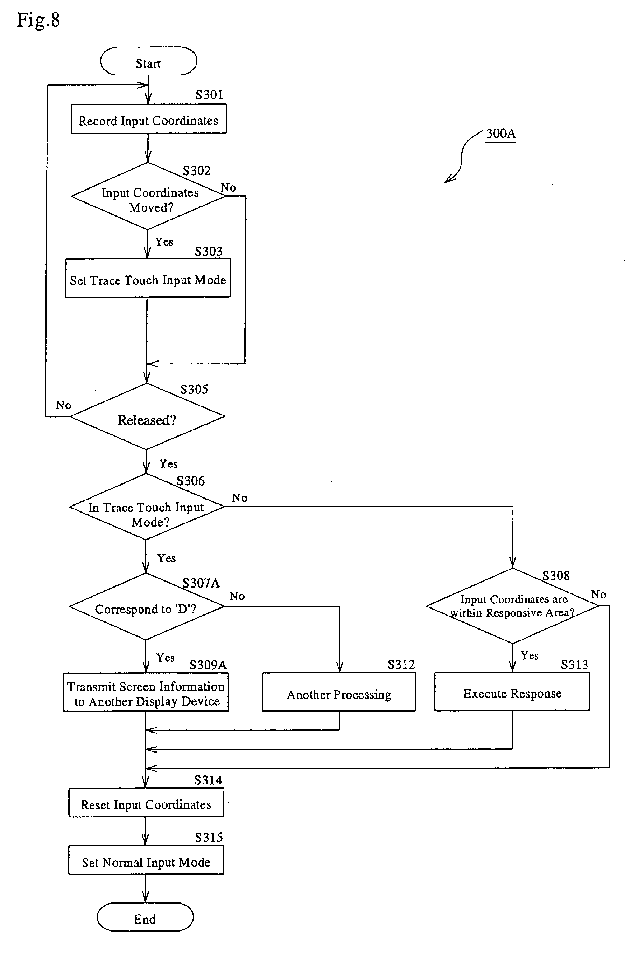

Fig. 7 is a flow chart showing the operation of the controller 30A shown in Fig. 6. Since the flow shown therein is similar to the flow shown in Fig. 2 except for the contents of a response processing step 300A shown in detail in Fig. 8, it is not described here.

Fig. 8 is a flow chart showing in detail the response processing step 300A shown in Fig. 7. Since the flow shown therein is similar to the flow shown in Fig. 3 except for the contents of a trace judgment step 307A and a trace input response step 309A, the same portions are not described here.

When judging the input mode is a trace touch input mode in Step 306, the controller 30A goes to the trace judgment step 307A, wherein whether a trace touch input operation conducted onto the display 10 corresponds to a prescribed character input operation indicating a display on the display 15 of the another display device 5, a character input operation of drawing a character 'D' in this embodiment, is judged. When it is judged that the character input operation corresponds to the character 'D', the operation goes to the trace input response step 309A, wherein currently displayed screen information is transmitted to the another display device 5, and then, goes to Step 314. When receiving the above transmission from the communicator 55, the controller 35 of the another display device 5 displays the screen information on the display 15. On the other hand, when the character input operation does not correspond to the character 'D', the operation goes to Step 312.

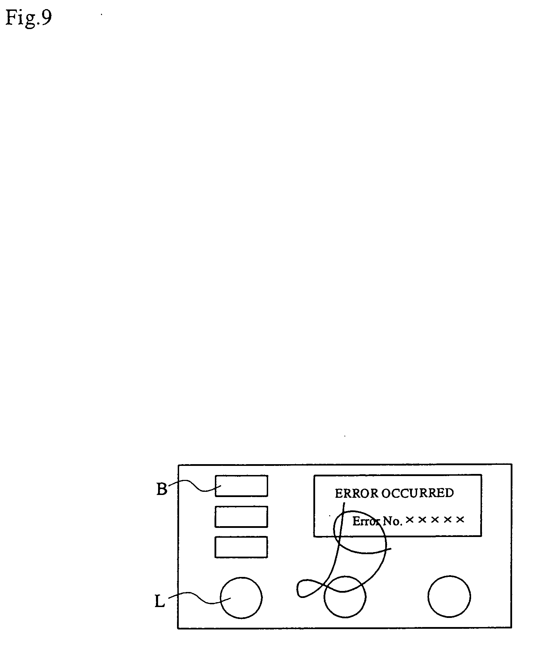

Fig. 9 is an illustration showing an example of a character input operation corresponding to the character 'D' conducted onto the screen shown in Fig. 4(a).
Using the above display device according the second embodiment, by the prescribed character input operation onto the display 10, the currently displayed screen information can be swiftly displayed on the display 15 of the another display device 5.

Therefore, an operator who recognized an abnormal condition through the display screen as shown in Fig. 4(a) or Fig. 4(d) can swiftly display on the display 15 of the another display device 5 the screen information such as an error message or an image indicating an unusual operating status shown on the display 10 by conducting only a character input operation as shown in Fig. 9 onto the display 10 without changing the screen display on the display 10. The controller 35 of the another display device 5 transmits the screen information through the communicator 55 to the printer 70 or recording medium 80 for a printout or storage. As a result, a supervisor of the another display device 5 can conduct centralized remote control on screen displays of the display device 1 and still other display devices (not shown) arranged in each apparatus related to a process of which the supervisor takes charge.

In another embodiment, the processing on screen information in an external unit such as a printer 70 or a recording medium 80 with such trace touch input operation is customizable as well as the above-described trace analysis determination information. Thus, a user can set the processing such as a printout or writing onto a recording medium as the processing on the screen information in the external unit, so that the display device can be made suitable for a use environment of the user, resulting in being more convenient.

## Claims

1. A display device, comprising:
a display;
a screen information memory in which screen information shown on the display is stored,
a touch input detector for detecting a touch input onto the display;
a communicator for carrying out data communications with an external unit; and
a controller for controlling said elements, wherein:
the controller controls transmission of currently displayed screen information through the communicator to the external unit in response to a trace touch input operation conducted onto the display.

2. A display device according to Claim 1, wherein:
the trace touch input operation is a prescribed character input operation;
the external unit is a printer; and
the screen information and control information for a printout on the printer are transmitted through the communicator to the printer by the trace touch input operation.

3. A display device according to Claim 1, wherein:
the trace touch input operation is a prescribed character input operation;
the external unit is another display device; and
the screen information is transmitted through the communicator to the another display device by the trace touch input operation.

4. A customizing method of a display device, comprising:
a trace entry step of allowing a user to draw a trace in screen creation software;
a trace processing setting step of setting processing in response to the trace; and
a trace analysis determination information updating step of transferring the trace processing setting to any of the display devices according to Claims 1-3 and updating trace analysis determination information for analyzing a trace and determining what to do.

5. A computer-readable recording medium, on which recorded is a customizing program for realizing a customizing function of any of the display devices according to Claims 1-3, comprising:
a trace entry step of allowing a user to draw a trace in screen creation software;
a trace processing setting step of setting processing in response to the trace; and
a trace analysis determination information updating step of transferring the trace processing setting to the display device and updating trace analysis determination information for analyzing a trace and determining what to do.
